# EUROPÄISCHE PATENTSCHRIFT

(11) **EP 0 446 704 B1**
(45) Veröffentlichungstag und Bekanntmachung des Hinweises auf die Patenterteilung: **15.06.1994**
(21) Anmeldenummer: 91102872.8
(22) Anmeldetag: 27.02.1991
(51) Int. Cl.: A47J 43/25

(54) **Küchengerät**
Kitchen utensil
Appareil culinaire

(30) Priorität: 16.03.1990 DE 4008448
(43) Veröffentlichungstag der Anmeldung: 18.09.1991
(73) Patentinhaber: Arnold, Gerhard, 65187 Wiesbaden (DE)
(72) Erfinder: Arnold, Gerhard, 65187 Wiesbaden (DE)
(74) Vertreter: Schlagwein, Udo, Dipl.-Ing.

(56) Entgegenhaltungen:
- BE-A- 437 032
- DE-B- 1 023 200
- FR-A- 1 323 571
- FR-A- 2 542 184
- US-A- 2 529 473
- US-A- 3 133 570

## Beschreibung

Die Erfindung bezieht sich auf ein Küchengerät mit einer in einem Gehäuse drehbar angeordneten Schneidwalze, welche einen Schneidgutraum zu einer Seite hin begrenzt, in den hinein von der der Schneidwalze gegenüberliegenden Seite her ein Preßteil beweglich ist, wobei der Schneidgutraum auf der in Drehrichtung der Schneidwalze liegenden Seite durch eine feststehende Wand und durch zwei weitere seitlich angeordnete Wände zu drei Seiten begrenzt ist.

Ein Küchengerät der vorstehenden Art, bei denen der Schneidraum auf der in Drehrichtung der Schneidwalze liegenden Seite durch eine feststehende Wand und durch zwei weitere seitlich angeordnete Wände zu drei Seiten begrenzt ist, ist Gegenstand der US-A-2,529,473. Eine Seite des Schneidgutraumes ist offengelassen, so daß dort das Schneidgut eingefüllt werden kann. Diese Öffnung bleibt auch während der Benutzung des Küchengerätes offen. Da das Küchengerät zum Festschrauben an eine Tischplatte ausgebildet ist, weist die Öffnung stets genau zur Seite, so daß die Gefahr eines Herausfallens von Schneidgut relativ gering ist.

Das bekannte Küchengerät eignet sich insbesondere dazu, Käse zu zerreiben. Wollte man mit dem Küchengerät Zwiebel schneiden, dann machte es sich nachteilig bemerkbar, daß die Öffnung des Schneidgutraumes nicht zu verschließen ist. Dadurch können beim Zwiebelschneiden die Augen stark reizende Stoffe austreten, was unangenehm ist. Weiterhin kann das Küchengerät nicht zum Aufbewahren einer teilweise geschnittenen Zwiebel benutzt werden, weil es nicht nach außen hin abgeschlossen ist.

Die FR-A-1 323 571 beschreibt auch schon ein Küchengerät, bei dem ein Schneidgutraum von vier Seitenwänden, nach unten hin von der Schneidgutwalze und nach oben hin vom Preßteil verschlossen ist. Deshalb kann bei Benutzung des Küchengerätes kein Schneidgut aus dem Schneidgutraum herausfallen und ein Austritt von die Augen reizenden Stoffen ist nur gering. Bei diesem Küchengerät handelt es sich genau wie bei dem zuvor erläuterten Gerät um ein an einer Tischplatte zu befestigendes Gerät.

Auf dem Markt ist auch schon ein von Hand zu haltendes Küchengerät bekannt, bei dem das Preßteil den Schneidgutraum zur der Schneidwalze gegenüberliegenden Seite und weiterhin nach vorn und hinten begrenzt. Die Befüllung des Schneidgutraumes erfolgt durch eine Öffnung in einer Stirnwand des Schneidgutraumes. Diese Öffnung bleibt bei Benutzung des Küchengerätes immer offen. Man muß deshalb beim Halten des Gerätes immer darauf achten, daß die Öffnung stets nach oben hin weist, damit aus ihr kein Schneidgut herausfällt. Weiterhin hat das auf dem Markt befindliche Küchengerät wegen des Fehlens einer feststehenden Wand auf der in Drehrichtung der Schneidwalze liegenden Seite die Neigung, daß sich Schneidgut zwischen der Schneidwalze und der rückwärtigen Wand des Preßteils verklemmt. Dadurch würde ein weiteres Herunterdrücken des Preßteiles erschwert oder ausgeschlossen. Ein weiterer Nachteil des bekannten Küchengerätes liegt darin, daß seine Öffnung zum Einfüllen des Schneidgutes stets unverschlossen bleibt, so daß beim Zwiebelschneiden die Augen stark reizende Stoffe austreten können.

Der Erfindung liegt die Aufgabe zugrunde, ein Küchengerät der eingangs genannten Art so auszubilden, daß es von Hand zu halten und zum Schneiden von Zwiebeln besonders geeignet ist.

Diese Aufgabe wird erfindungsgemäß dadurch gelöst, daß das Preßteil an der in Drehrichtung der Schneidwalze liegenden Seite um eine parallel zur Schneidwalzenachse verlaufende Achse mittels zweier seitlicher Achszapfen schwenkbar und in Richtung der Schneidwalze hin verschieblich gelagert ist und daß das Preßteil auf der entgegen der Drehrichtung der Schneidwalze liegenden Seite eine den Schneidgutraum begrenzende, außenseitig über das Gehäuse des Küchengerätes greifende Abschlußwand hat.

Bei einem solchen, von Hand zu haltenden Küchengerät ist der Schneidgutraum, genau wie der nach der FR-A-1 323 571, bei Benutzung des Küchengerätes allseitig geschlossen. Die Augen reizende Stoffe können deshalb nicht austreten. Weiterhin besteht keine Gefahr eines Verklemmens von Schneidgut, da dieses gegen eine feste, rückwärtige Wand und nicht wie bei dem auf dem Markt befindlichen Küchengerät gegen eine mit dem Preßteil bewegliche Wand gelangt. Mit dem erfindungsgemäßen Küchengerät ist es möglich, die geschnittenen Zwiebelringe direkt aus dem Gerät in ein vorgesehenes Behältnis fallen zu lassen. Man könnte natürlich auch die untere Ausfallöffnung verschließbar ausbilden, so daß die Zwiebelringe zunächst in dem Zwiebelschneider verbleiben, was vorteilhaft ist, wenn der Zwiebelschneider bei Tisch benutzt werden soll.

Hervorzuheben ist auch, daß das Küchengerät sehr gut zu reinigen ist.

Das Preßteil ist auf einfache Weise in den Schneidgutraum hinein bewegbar und zum Öffnen des Schneidgutraumes mit seiner Abschlußwand hochklappbar, wenn gemäß einer vorteilhaften Ausgestaltung der Erfindung in jeder seitlichen Wand nahe der in Drehrichtung der Schneidwalze liegenden Wand jeweils eine Führungsnut vorgesehen ist, in die das Preßteil mit jeweils einem Achszapfen greift.

Das Preßteil kann zum Reinigen des Küchengerätes einfach nach oben hin aus dem Schneidgutraum herausgezogen werden, wenn die Führungsnuten bis zur Oberkante der jeweiligen seitlichen Wand verlaufen.

Der Gefahr eines Verkantens des Preßteiles beim Hineindrücken in den Preßgutraum kann man dadurch begegnen, daß die seitlichen Wände nahe ihrer der Drehrichtung der Schneidwalze gegenüberliegenden Seite jeweils einen aufeinandergerichteten Steg aufweisen, der jeweils in eine Ausnehmung des Preßteiles greift.

Eine andere, sehr einfache Möglichkeit der Führung des Preßteiles beim Hineindrücken in den Preßgutraum besteht darin, daß in einer von der Abschlußwand des Preßteiles übergriffenen, vorderen Gehäusewand eine schwalbenschwanzartige Führung vorgesehen ist, in welche die Abschlußwand beim Herunterschieben des Preßteiles mit seitlichen Kanten geführt ist.

Ein Zerdrücken von Zwiebeln im Schneidgutraum durch die tangential gerichteten Schneidkräfte wird auf einfache Weise dadurch verhindert, daß der Schneidgutraum im wesentlichen zylindrisch ausgebildet ist und die über das Gehäuse greifende Abschlußwand einen Schlitz im Schneidgutraum absperrt, der zum Durchgreifen mittels eines Fingers oder mehrerer Finger bemessen ist. Die kreisförmige Form hat zudem den Vorteil, daß das Schneidgut im Schneidgutraum zwangsläufig zentriert wird.

Wenn das Küchengerät zum Schneiden von relativ großvolumigen Zwiebeln ausgelegt ist, dann kann es Schwierigkeiten machen oder sogar unmöglich werden, mit den Fingern über das Preßteil und zugleich auf der gegenüberliegenden Seite über das feststehende Gehäuse zu greifen. Wenn gemäß einer vorteilhaften Ausgestaltung der Erfindung am Gehäuse im Bereich der Schneidwalze auf der Seite der Abschlußwand eine nach außen gerichtete Griffrippe vorgesehen ist, dann kann man in solchen Fällen bei noch nicht weit in den Schneidgutraum eingeschobenem Preßteil zunächst hinter diese Griffrippe greifen, so daß eine geringere Spannweite erforderlich wird.

Günstig ist es auch, wenn die Mantelfläche des Gehäuses im einlaufseitigen Viertel der Schneidwalze eine nach außen gerichtete Ausbuchtung aufweist. Diese Ausbuchtung ermöglicht es, daß Zwiebelstücke, die sich aus der Zwiebel herausreißen und in den Spalt zwischen Gehäuse und Schneidwalze gelangen, aus dem Küchengerät herausfallen können, sobald sie diese Ausbuchtung erreicht haben.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. In ihr zeigen die
- Fig. 1: eine Draufsicht auf ein erfindungsgemäßes Küchengerät,
- Fig. 2: einen Längsschnitt durch das Küchengerät nach Figur 1 entlang der Linie II - II in Figur 3,
- Fig. 3: einen Querschnitt durch das Küchengerät,
- Fig. 4: einen Schnitt durch das Küchengerät entlang der Linie IV - IV in Figur 3,
- Fig. 5: eine Draufsicht auf eine zweite Ausführungsform eines Küchengerätes nach der Erfindung,
- Fig. 6: eine Draufsicht auf das Gehäuse einer weiteren Ausführungsform des Küchengerätes,
- Fig. 7: einen horizontalen Schnitt durch die vordere Abschlußwand eines Preßteiles des Küchengerätes.

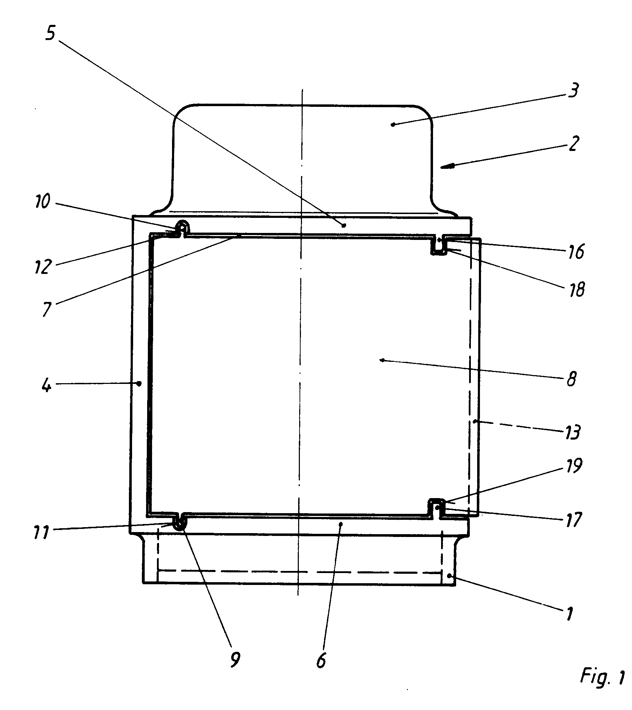

Das in Figur 1 gezeigte Küchengerät hat in einem Gehäuse 1 drehbar eine Schneidwalze 2, von der in Figur 1 nur ein Griffteil 3 zu sehen ist, mit dem man bei Benutzung des Küchengerätes die Schneidwalze 2 drehen kann.

Drei feststehende Wände 4, 5, 6 begrenzen zu drei Seiten hin einen Schneidgutraum 7, der nach oben und vorn hin von einem Preßteil 8 abgeschlossen ist. Dieses Preßteil 8 hat zwei seitliche Achszapfen 9, 10, mit denen es jeweils in eine Führungsnut 11, 12 der seitlichen Wände 5, 6 eingreift. Nach vorn hin greift das Preßteil 8 mit einer Abschlußwand 13 über das Gehäuse 1, wodurch es möglich wird, daß Preßteil 8 in den Schneidgutraum 7 hinein zu bewegen.

Die Figur 1 läßt weiterhin erkennen, daß die seitlichen Wände 5, 6 nahe der Abschlußwand 13 jeweils einen aufeinandergerichteten Steg 16, 17 aufweisen, welcher jeweils in eine entsprechende Ausnehmung 17, 18 des Preßteiles 8 greift. Dadurch wird das Preßteil 8 auch an der Seite der Abschlußwand 13 verkantungsfrei geführt.

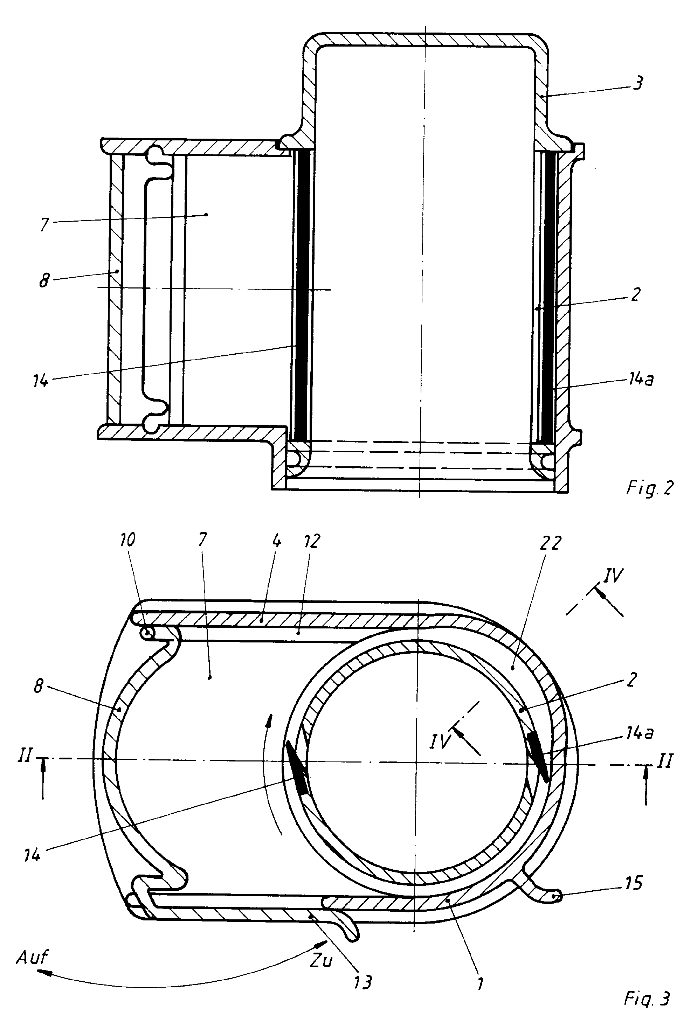

Die Schnittdarstellung gemäß Figur 2 zeigt, daß die Schneidwalze 2 über die Breite des Schneidgutraumes 7 zwei Messer 14, 14a hat, mit denen Zwiebeln geschnitten werden, wenn man am Griffteil 3 dreht und gleichzeitig das Preßteil 8 in den Schneidgutraum 7 hineindrückt.

Die Figur 3 zeigt deutlich, wie das Preßteil 8 an einer Seite mit seinem Achszapfen 10 in die Führungsnut 12 greift und wie die Abschlußwand 13 über das Gehäuse 1 gleitet, wenn man das Preßteil 8 in den Schneidgutraum 7 hineinschiebt. Bei dieser Verschiebebewegung gleitet der Achszapfen 10 in der Führungsnut 12 nach unten. Will man den Schneidgutraum 7 öffnen, so ist das jederzeit möglich, indem man das Preßteil 8 um den Achszapfen 10 und den nur in Figur 1 zu sehenden Achszapfen 9 verschwenkt.

Für die Funktion sehr vorteilhaft ist eine in Figur 3 zu erkennende Ausbuchtung 22 des Gehäuses 1 im Bereich des in Figur 3 gesehen oberen Viertels der Schneidwalze 2. Sollte sich ein Zwiebelstück lösen und zwischen dem Gehäuse 1 und der Schneidwalze 2 zunächst eingeklemmt werden, dann gelangt es nach einem sehr kurzen Weg in diese Ausbuchtung und kann nach unten herausfallen.

Die Figur 3 läßt weiterhin eine Griffrippe 15 am Gehäuse 1 erkennen, hinter die man greifen kann, wenn der Abstand des Preßteiles 8 von der Unterseite des Gehäuses 1 zu groß ist, um bis zu der Gehäuseunterseite greifen zu können.

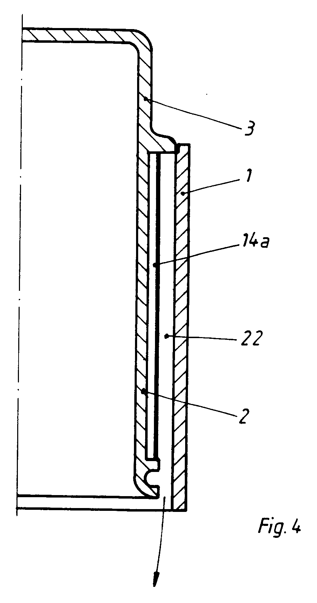

Die Figur 4 verdeutlicht, daß die Ausbuchtung 22 nach unten hin offen ist, so daß in sie gelangende Zwiebelstückchen nach unten hin aus dem Zwiebelschnneider herausfallen können.

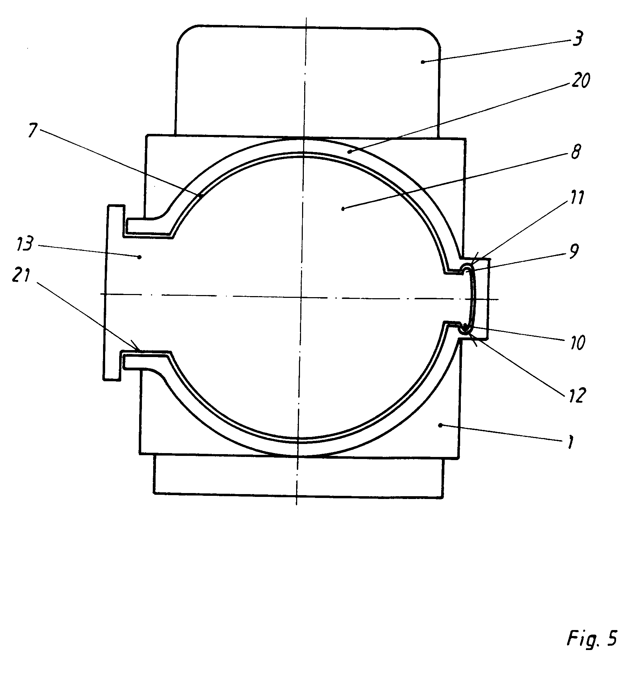

Bei der Ausführungsform nach Figur 5 ist der Schneidgutraum 7 zylindrisch ausgebildet. Entsprechend hat das Preßteil 8 von oben gesehen in etwa kreisförmigen Querschnitt. Die Wand 20 des Schneidgutraumes 7 springt im rückwärtigen Bereich zurück, um das Preßteil 8 - genau wie bei der bereits erläuterten Ausführungsform - mittels in Führungsnuten 11, 12 greifende Achszapfen 9, 10 schwenkbar und verschiebbar zu führen.

Die Wand 20 des Schneidraumes 8 reicht zur Seite der Abschlußwand 13 so weit, daß nur ein relativ enger Schlitz 21 verbleibt, durch den man beim Herunterdrücken des Preßteiles 8 mit einem Finger oder mehreren greifen kann.

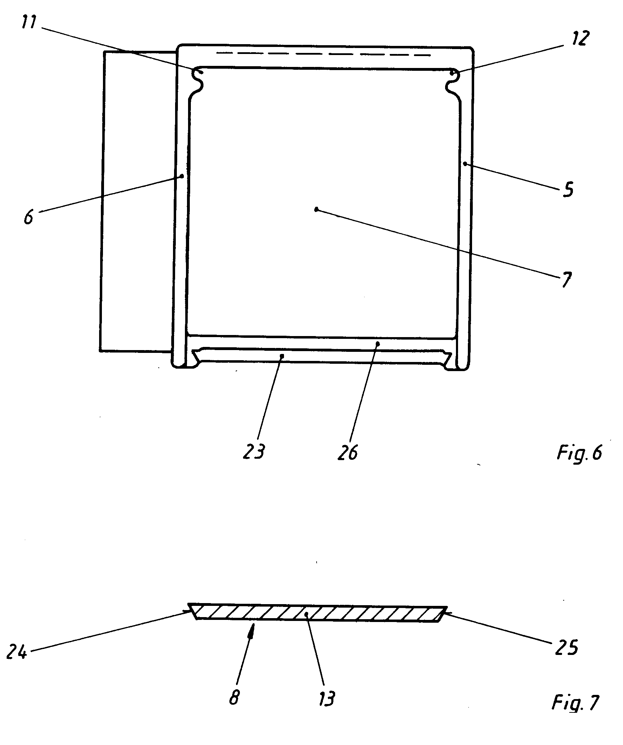

Bei der Ausführungsform nach Figur 6 ist in einer die seitlichen Wände 5, 6 verbindenden, den Schneidgutraum 7 im unteren Bereich nach vorn hin begrenzenden Gehäusewand 26 eine schwalbenschwanzförmige Führung 23 vorgesehen. Diese Führung erstreckt sich auf der Vorderseite des Küchengerätes so weit nach oben, daß die in Figur 7 im Schnitt gezeigte Abschlußwand 13 des Preßteiles 8 nach dem Zuklappen des Preßteiles mit abgeschrägten Kanten 24, 25 in die Führung 23 zu gelangen vermag. Schiebt man das Preßteil 8 nach unten, dann wird die Abschlußwand 13 von dieser Führung 23 geführt. Dadurch kann sich der Schneidgutraum 7 nicht öffnen, solange das Preßteil sich nicht in oberster Stellung befindet, wo die Abschlußwand aus der Führung gelangt und deshalb ein Hochschwenken um die Achszapfen 9, 10 möglich wird.

Genau wie bei dem zuvor beschriebenen Ausführungsbeispiel hat das Preßteil die in Figur 1 zu erkennenden Achszapfen 9 und 10, mit denen es in die in Figur 6 ebenfalls gezeigten Führungsnuten 11 und 12 der seitlichen Wände 5, 6 greift.

### Auflistung der verwendeten Bezugszeichen

- 1: Gehäuse
- 2: Schneidwalze
- 3: Griffteil
- 4: Wand
- 5: Wand
- 6: Wand
- 7: Schneidgutraum
- 8: Preßteil
- 9: Achszapfen
- 10: Achszapfen
- 11: Führungsnut
- 12: Führungsnut
- 13: Abschlußwand
- 14: Messer
- 15: Griffrippe
- 16: Steg
- 17: Steg
- 18: Ausnehmung
- 19: Ausnehmung
- 20: Wand
- 21: Schlitz
- 22: Ausbuchtung
- 23: Führung
- 24: Kante
- 25: Kante
- 26: Gehäusewand

## Patentansprüche

1. Küchengerät mit einer in einem Gehäuse (1) drehbar angeordneten Schneidwalze (2), welche einen Schneidgutraum (7) zu einer Seite hin begrenzt, in den hinein von der der Schneidwalze (2) gegenüberliegenden Seite her ein Preßteil (8) beweglich ist, wobei der Schneidgutraum (7) auf der in Drehrichtung der Schneidwalze (2) liegenden Seite durch eine feststehende Wand (4) und durch zwei weitere seitlich angeordnete Wände (5,6) zu drei Seiten begrenzt ist, **dadurch gekennzeichnet**, daß das Preßteil (8) an der in Drehrichtung der Schneidwalze (2) liegenden Seite um eine parallel zur Schneidwalzenachse verlaufende Achse mittels zweier seitlicher Achszapfen (9, 10) schwenkbar und in Richtung der Schneidwalze (2) hin verschieblich gelagert ist und daß das Preßteil (8) auf der entgegen der Drehrichtung der Schneidwalze (2) liegenden Seite eine den Schneidgutraum (7) begrenzende, außenseitig über das Gehäuse (1) des Küchengerätes greifende Abschlußwand (13) hat.

2. Küchengerät nach Anspruch 1, dadurch gekennzeichnet, daß in jeder seitlichen Wand (5, 6) nahe der in Drehrichtung der Schneidwalze (2) liegenden Wand (4) jeweils eine Führungsnut (11, 12) vorgesehen ist, in die das Preßteil (8) mit jeweils einem Achszapfen (9, 10) greift.

3. Küchengerät nach den Ansprüchen 1 und 2, dadurch gekennzeichnet, daß die Führungsnuten (11, 12) bis zur Oberkante der jeweiligen seitlichen Wand (5, 6) verlaufen.

4. Küchengerät nach zumindest einem der vorangehenden Ansprüche, dadurch gekennzeichnet, daß die seitlichen Wände (5, 6) nahe ihrer der Drehrichtung der Schneidwalze (2) gegenüberliegenden Seite jeweils einen aufeinandergerichteten Steg (16, 17) aufweisen, der jeweils in eine Ausnehmung (18, 19) des Preßteiles (8) greift.

5. Küchengerät nach zumindest einem der vorangehenden Ansprüche, dadurch gekennzeichnet, daß in einer von der Abschlußwand (13) des Preßteiles (8) übergriffenen, vorderen Gehäusewand (26) eine schwalbenschwanzartige Führung (23) vorgesehen ist, in welche die Abschlußwand (13) beim Herunterschieben des Preßteiles (8) mit seitlichen Kanten (24, 25) geführt ist.

6. Küchengerät nach zumindest einem der vorangehenden Ansprüche, dadurch gekennzeichnet, daß der Schneidgutraum (7) im wesentlichen zylindrisch ausgebildet ist und die über das Gehäuse (1) greifende Abschlußwand (13) einen Schlitz (21) im Schneidgutraum (7) absperrt, der zum Durchgreifen mittels eines Fingers oder mehrerer Finger bemessen ist.

7. Küchengerät nach zumindest einem der vorangehenden Ansprüche, dadurch gekennzeichnet, daß am Gehäuse (1) im Bereich der Schneidwalze (2) auf der Seite der Abschlußwand (13) eine nach außen gerichtete Griffrippe (15) vorgesehen ist.

8. Küchengerät nach zumindest einem der vorangehenden Ansprüche, dadurch gekennzeichnet, daß die Mantelfläche des Gehäuses (1) im einlaufseitigen Viertel der Schneidwalze (2) eine nach außen gerichtete Ausbuchtung (22) aufweist.

## Claims

1. Kitchen utensil with a cutting roller (2) which is arranged rotatably in a casing (1) and limits a cuttings chamber (7) toward one side, into which a pressing part (8) is movable from the side remote from the cutting roller (2), wherein the cuttings chamber (7) is limited on the side located in the direction of rotation of the cutting roller (2) by a stationary wall (4) and by two further laterally arranged walls (5, 6) on three sides, characterised in that the pressed part (8) is pivotal on the side located in the rotational direction of the cutting roller (2) round a shaft extending parallel to the cutting roller axis by means of two lateral journals (9, 10) and is movably guided in the direction of the cutting roller (2) and in that the pressed part (8) has, on the side located against the rotational direction of the cutting roller (2), an end wall (13) which limits the cuttings chamber (7) and engages externally beyond the casing (1) of the kitchen utensil.

2. Kitchen utensil according to claim 1, characterised in that in each lateral wall (5, 6) close to the wall (4) located in the rotational direction of the cutting roller (2) there is provided a respective guide groove (11, 12) in which the pressing part (8) engages with a respective journal (9, 10).

3. Kitchen utensil according to claims 1 and 2, characterised in that the guide grooves (11, 12) extend to the upper edge of the respective lateral wall (5, 6).

4. Kitchen utensil according to at least one of the preceding claims, characterised in that the lateral walls (5, 6) have, close to their side remote from the direction of rotation of the cutting roller (2), a respective web (16, 17) which is directed toward the other web and engages in a respective recess (18, 19) in the pressing part (8).

5. Kitchen utensil according to at least one of the preceding claims, characterised in that in a front casing wall (26) overlapped by the end wall (13) of the pressing part (8) there is provided a dovetail-like guide (23) in which the end wall (13) is guided during the downward sliding of the pressing part (8) with lateral edges (24, 25).

6. Kitchen utensil according to at least one of the preceding claims, characterised in that the cuttings chamber (7) is substantially cylindrical in design and the end wall (13) engaging with the casing (1) blocks a slot (21) in the cuttings chamber (7) which is dimensioned for reaching through by means of a finger or fingers.

7. Kitchen utensil according to at least one of the preceding claims, characterised in that an outwardly directed rib (15) is provided on the casing (1) in the region of the cutting roller (2) on the side of the end wall (13).

8. Kitchen utensil according to at least one of the preceding claims, characterised in that the surface of the casing (1) has an outwardly directed bulge (22) in the inlet-side quarter of the cutting roller (2).

## Revendications

1. Appareil culinaire avec un cylindre de coupe (2) monté à rotation dans un carter (1), lequel comporte latéralement un volume pour le produit à couper, volume dans lequel un poussoir (8) se déplace vers le cylindre de coupe, ledit volume pour produit à couper (7) étant délimité sur trois côtés, par une paroi résistante (4) sur le côté disposé dans le sens de rotation du cylindre de coupe (2), et par deux autres parois latérales (5, 6), caractérisé en ce que sur son côté situé dans le sens de rotation du cylindre de coupe, le poussoir (8) est apte à pivoter par deux pivots latéraux (9, 10) autour d'un axe parallèle à l'axe du cylindre de coupe, et apte à coulisser en direction du cylindre de coupe (2), et en ce que sur son côté opposé au sens de rotation, le poussoir (8) possède une paroi de fermeture (13) du volume (7) s'accrochant extérieurement sur le carter (1) de l'appareil culinaire.

2. Appareil culinaire selon la revendication 1, caractérisé en ce qu'on prévoit une encoche de guidage (11, 12) sur chaque paroi latérale (5, 6) et à proximité de la paroi (4) située dans le sens de rotation du cylindre de coupe, encoches dans lesquelles s'accroche le poussoir (8) par chacun de ses pivots (9, 10).

3. Appareil culinaire selon l'une des revendications 1 à 2, caractérisé en ce que les encoches de guidage (11, 12) s'étendent jusqu'aux arêtes supérieures des parois correspondantes (5, 6).

4. Appareil culinaire selon au moins l'une des revendications précédentes, caractérisé en ce que les parois latérales (5, 6) au voisinage de la paroi opposée à celle qui est située dans le sens de rotation du cylindre de coupe (2), présentent chacune une barrette (16, 17), laquelle est en prise dans un logement (18, 19) du poussoir (8).

5. Appareil culinaire selon l'une au moins des revendications précédentes, caractérisé en ce que, dans l'une des parois du carter (26) recouverte par la paroi de fermeture (13) du poussoir (8), on prévoit un moyen de guidage (23) en queue d'aronde, dans lequel est guidé la paroi de fermeture (13) par ses pans coupés (24, 25) lors de l'enfoncement du poussoir.

6. Appareil culinaire selon l'une au moins des revendications précédentes, caractérisé en ce que le volume pour les produits à couper (7) est cylindrique et en ce que la paroi de fermeture (13) en prise sur le carter (1) obture une ouverture (21) dans le volume de produit à couper (7) laquelle est dimensionnée pour être pénétrée par un ou plusieurs doigts.

7. Appareil culinaire selon l'une au moins des revendications précédentes, caractérisé en ce que le carter (1) est pourvu d'une mesure de préhension (15), du côté de la paroi de fermeture (13) dans la région du cylindre de coupe, et dirigé vers l'extérieur.

8. Appareil culinaire selon l'une au moins des revendications précédentes, caractérisé en ce que la surface externe du carter (1) présente une boursouflance (22) dans le premier quart du cylindre de coupe.
